(19) **Europäisches Patentamt / European Patent Office / Office européen des brevets**

(11) **EP 4 157 139 B1**

(12) **FASCICULE DE BREVET EUROPEEN**

(45) Date de publication et mention de la délivrance du brevet:
**01.05.2024 Bulletin 2024/18**

(21) Numéro de dépôt: **21729035.2**

(22) Date de dépôt: **26.05.2021**

(51) Classification Internationale des Brevets (IPC):
**A61C 5/42** *(2017.01)*

(52) Classification Coopérative des Brevets (CPC):
**A61C 5/42**

(86) Numéro de dépôt international:
**PCT/IB2021/054580**

(87) Numéro de publication internationale:
**WO 2021/240387 (02.12.2021 Gazette 2021/48)**

(54) **INSTRUMENT ENDODONTIQUE, NOTAMMENT POUR L'ALÉSAGE D'UN CANAL RADICULAIRE**

ENDODONTISCHES INSTRUMENT, INSBESONDERE ZUM AUFWEITEN EINES WURZELKANALS

ENDODONTIC INSTRUMENT, IN PARTICULAR FOR REAMING A ROOT CANAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2020 CH 6452020**

(43) Date de publication de la demande:
**05.04.2023 Bulletin 2023/14**

(73) Titulaire: **FKG Dentaire Sàrl**
**2322 Le Crêt-du-Locle (CH)**

(72) Inventeurs:
• **ROSATO, Gianluca**
  **2300 La Chaux-de-Fonds (CH)**
• **WINKEL, Yann**
  **2400 Le Locle (CH)**
• **VALLOTTON, Paul-Henri**
  **1142 Pampigny (CH)**
• **BREGUET, Olivier**
  **2400 Le Locle (CH)**

(74) Mandataire: **P&TS SA (AG, Ltd.)**
**Avenue J.-J. Rousseau 4**
**P.O. Box 2848**
**2001 Neuchâtel (CH)**

(56) Documents cités:
**CH-A1- 707 745      DE-A1- 19 723 695**
**US-B1- 6 702 579**

**EP 4 157 139 B1**

**Description**

**Domaine technique**

La présente invention concerne un instrument endodontique notamment pour l'alésage d'un canal radiculaire d'une dent d'un patient, ledit instrument présentant un tronçon de travail se terminant par une zone d'extrémité avec une extrémité libre sous forme de pointe, ladite zone d'extrémité ayant une double fonction de guidage et de coupe.

**Etat de la technique**

Le nettoyage et la mise en forme des canaux radiculaires d'une dent destinée à recevoir des substances d'obturation s'effectuent grâce à l'utilisation d'instruments d'alésage ayant une partie active, dite tronçon de travail, qui a pour but de façonner, de tailler et de nettoyer les parois intérieures du canal radiculaire pour le préparer à recevoir les matériaux de traitement et d'obturation afin d'éviter toute accumulation d'oxygène dans le canal, susceptible de favoriser un développement bactérien dans la dent.

Il est cependant indispensable pour le praticien de disposer d'un instrument capable de suivre le canal radiculaire afin de traiter les parois sans dévier par rapport à la direction de ce canal quelle que soit sa configuration. Or le suivi du canal radiculaire est primordialement lié aux caractéristiques de guidage de la zone d'extrémité et plus spécifiquement à la géométrie de la pointe. Néanmoins, même si le guidage est une fonction essentielle, l'usinage des parois du canal est également une fonction essentielle, de sorte que la zone d'extrémité et notamment la pointe doit impérativement être configurée pour pouvoir remplir efficacement ces deux fonctions que sont le guidage et la coupe. Vient ensuite l'enlèvement de matière qui est effectué par le tronçon de travail de l'instrument, prolongeant la zone d'extrémité et qui a, de façon connue, la fonction de coupe, la fonction d'usinage des parois du canal radiculaire et la fonction d'évacuation de la matière enlevée lors de l'usinage.

Dans la pratique la préparation du canal s'effectue avec une gamme d'instruments présentant tous des caractéristiques de guidage dans la zone d'extrémité puis des caractéristiques de coupe et d'évacuation de la matière enlevée dans la zone de travail. Le praticien commence habituellement la préparation du canal avec un instrument de diamètre nominal adapté au diamètre initial du canal dentaire, puis il remplace le premier instrument par un instrument du même type ayant un diamètre nominal supérieur et ainsi de suite en augmentant progressivement les sections des instruments.

Les instruments existants ont majoritairement une pointe de guidage qui ne présente pas de fonction coupante, de sorte qu'il est indispensable d'utiliser une gamme d'instruments dont les diamètres augmentent de façon très progressive, par exemple avec des pas de 0,05 mm, ce qui impose une séquence de six instruments pour le praticien lorsqu'il doit passer d'un diamètre d'entrée de 0,10 mm à 0,40 mm. Si ce processus n'est pas respecté, le risque de rupture de l'instrument dans le canal est considérablement augmenté.

Il existe toutefois des instruments dits à pointe active permettant, avec un effet de coupe au centre, de pénétrer dans un canal de très petite dimension. Mais selon les directives d'utilisation, ces instruments sont à utiliser exclusivement pour des opérations de retraitement et uniquement dans la partie rectiligne du canal. Une utilisation dans une partie courbe du canal entrainerait automatiquement des perforations de la paroi canalaire.

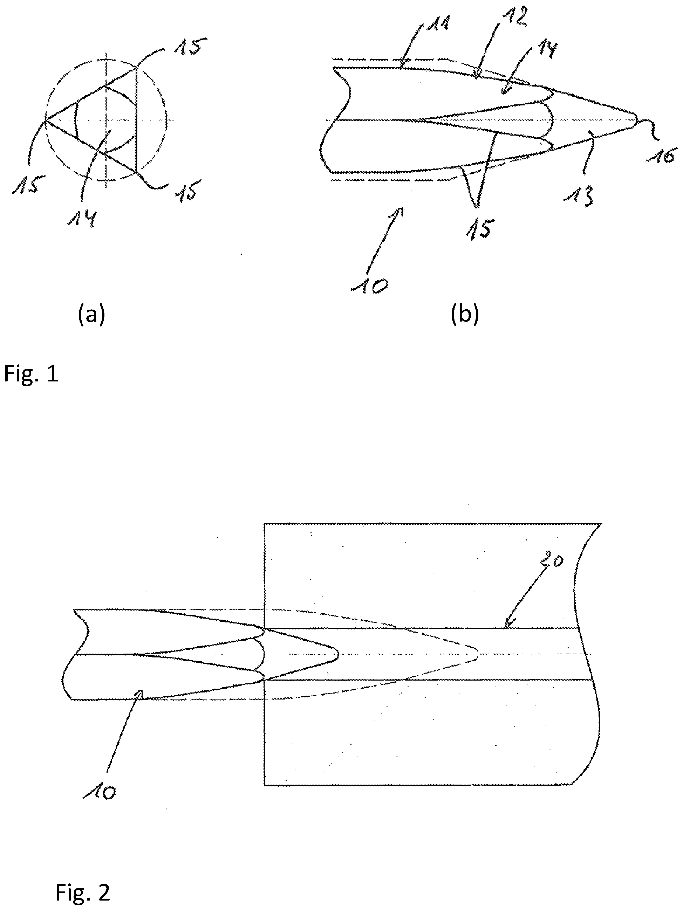

Le document CH707745 de la présente demanderesse décrit un instrument endodontique présentant un tronçon de travail se terminant par une zone d'extrémité avec une extrémité en pointe. Une vue en coupe longitudinale et en coupe transversale de la zone d'extrémité 12 sont montrées aux **figures 1a** et **1b,** respectivement. La zone d'extrémité 12 comporte d'une part un secteur conique de guidage 13 se terminant en pointe, ce secteur de guidage 13 ayant un angle de pointe compris entre 10° et 60°. D'autre part, la zone d'extrémité 12 comporte un secteur angulaire de coupe 14 adjacent au secteur conique de guidage 13, comportant plusieurs arêtes de coupe 15, formant un angle par rapport à l'axe longitudinal central de l'instrument. Ce secteur angulaire de coupe 14 s'étend sur une certaine longueur et il est intermédiaire entre le secteur conique de guidage 13 et le tronçon de travail 11. Ce secteur angulaire de coupe 14 présente une section progressivement croissante de la base du secteur conique de guidage 13, sur au moins une partie de sa longueur, en direction du tronçon de travail 11 de l'instrument 10. Les arêtes de coupe 15 sont au nombre de trois, également réparties autour de la périphérie de l'instrument 10. La pointe 16 de l'instrument est émoussée avec un profil arrondi, ce qui permet à l'instrument d'assumer une fonction de guidage lui permettant de suivre le tracé du canal radiculaire quelle que soit sa forme et notamment sa courbure.

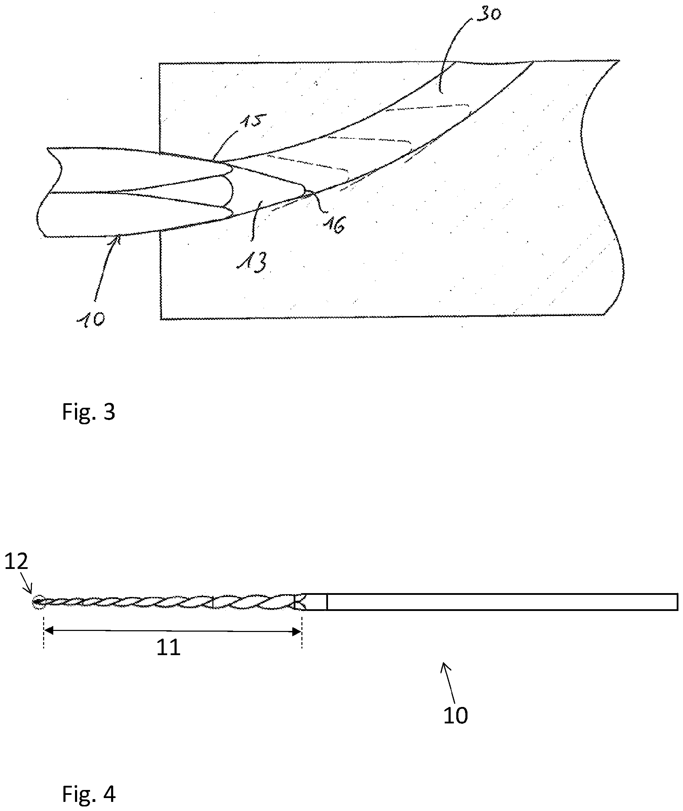

La pénétration de l'instrument 10 décrit dans CH707745 est représentée schématiquement dans un canal 30 rectiligne par la **figure 2** et dans un canal 30 courbe par la **figure 3.** Dans le canal rectiligne, l'instrument est choisi de telle manière que son diamètre de coupe optimal D3 corresponde au diamètre initial du canal. L'usinage du canal 30 peut s'effectuer efficacement et l'élargissement du canal se fait progressivement jusqu'à atteindre le diamètre nominal de l'instrument 10. Grâce à la géométrie du secteur conique de guidage 13 de l'instrument 10, cette dernière suit la courbure du canal 30 sans risquer de perforer les parois et de creuser un deuxième canal dans la dent.

La fonction coupante de la pointe va permettre une diminution du nombre d'instruments nécessaire à la progression et au nettoyage du canal jusqu'à l'apex.

## Résumé

La présente invention se propose de réaliser un instrument qui répond essentiellement à ces deux exigences complémentaires, à savoir assurer le guidage de l'instrument à la pénétration dans le canal radiculaire et effectuer la coupe au niveau des parois simultanément tout en respectant la configuration, c'est-à-dire suivre les courbures du canal.

Cet objectif est atteint par l'instrument endodontique pour l'alésage de canaux radiculaires, l'instrument comprenant un tronçon de travail ayant une section de travail, le tronçon de travail se terminant par une portion distale ayant une double fonction de guidage et de coupe. La portion distale comporte une tête de guidage et un secteur angulaire de coupe entre la tête de guidage et le tronçon de travail. Le secteur angulaire de coupe comprend une zone distale adjacente à la tête de guidage et une zone proximale entre la zone distale et le tronçon de travail. Le secteur angulaire de coupe comprend en outre des arêtes de coupe se prolongent sur toute la longueur de la zone proximale et la zone distale. La zone distale comporte une section distale de géométrie constante et la zone proximale comportant une section proximale dont la géométrie varie entre la section distale et la section de travail.

L'avantage de l'instrument endodontique décrit ici réside dans une plus grande efficacité de coupe de l'instrument. La portion distale, par sa fonction coupante ainsi que par sa proximité de la tête de guidage, permet une diminution du nombre d'instruments nécessaires à la progression et au nettoyage du canal jusqu'à l'apex du canal. La diminution d'instruments est encore plus grande que pour l'instrument décrit dans le document CH707745.

Lorsque l'instrument endodontique se trouve à la longueur de travail, c'est-à-dire avec la tête de guidage atteignant l'apex du canal, le nettoyage de cette zone apicale du canal, normalement très difficile, est rendu possible par la présence des arêtes de coupe du secteur angulaire de coupe, à proximité de la tête de guidage. Le meilleur nettoyage de cette zone apicale du canal permet de réduire le risque de réinfection ultérieure du canal (entraînant l'échec du traitement), puisque cette zone est particulièrement sensible au développement bactérien. Le meilleur usinage apical du canal par le secteur angulaire de coupe de la portion distale facilite les étapes subséquentes du traitement canalaire, notamment la désinfection et l'obturation du canal. En particulier le meilleur usinage apical du canal va permettre un ajustement idéal du cône de gutta percha, dans le cas d'une obturation de type *"single cône"*.

## Brève description des figures

Des exemples de mise en oeuvre de l'invention sont indiqués dans la description illustrée par les figures annexées dans lesquelles :

les figures 1a et 1b montrent une vue longitudinale (figure 1a) et en coupe transversale (figure 1b) d'une zone d'extrémité d'un instrument endodontique ;

la figure 2 représente schématiquement la pénétration de l'instrument des figures 1a et 1b dans un canal rectiligne ;

la figure 3 représente schématiquement la pénétration de l'instrument des figures 1a et 1b dans un canal courbe ;

la figure 4 illustre un instrument endodontique comprenant un tronçon de travail se terminant par une portion distale, selon un mode de réalisation ;

la figure 5 montre un détail de la portion distale, selon un mode de réalisation ;

la figure 6a montre des plans de sections transversales à différentes positions de la portion distale le long de l'axe longitudinal de l'instrument ;

la figure 6b montre des sections transversales de la zone distale selon les différents plans transversaux de la figure 6a ;

la figure 7 montre une section de la portion distale selon l'axe longitudinal de l'instrument ; et

la figure 8 montre un détail d'une tête de guidage et de la zone distale selon un mode de réalisation.

## Exemple(s) de mode de réalisation

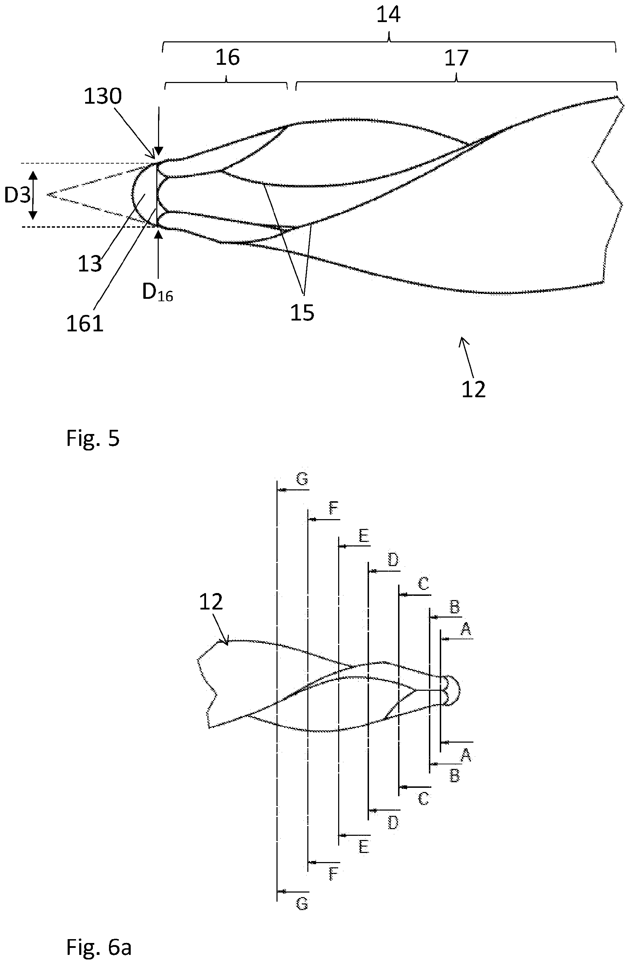

La **figure 4** illustre un instrument endodontique 10 destiné notamment à l'alésage d'un canal radiculaire d'une dent d'un patient. L'instrument comprend un tronçon de travail 11 ayant une section de travail 110. Le tronçon de travail 11 se terminant par une portion distale 12 ayant une double fonction de guidage et de coupe. La **figure 5** montre un détail de la portion distale 12. La portion distale 12 comporte une tête de guidage 13 et un secteur angulaire de coupe 14 entre la tête de guidage 13 et le tronçon de travail 11. Le secteur angulaire de coupe 14 comporte des arêtes de coupe 15 formant un angle par rapport à l'axe longitudinal 20 de l'instrument 10. Le secteur angulaire de coupe 14 comprend une zone distale 16 adjacente à la tête de guidage 13 et une zone proximale 17 entre la zone distale 16 et le tronçon de travail 11. On remarquera que les arêtes de coupe 15 se prolongent sur toute la longueur de la zone proximale 17 ainsi que sur toute la longueur de la zone distale 16, jusqu'à la jonction de la tête de guidage 13 et de la zone distale 16, indiqué par le plan 161 dans la figure 5.

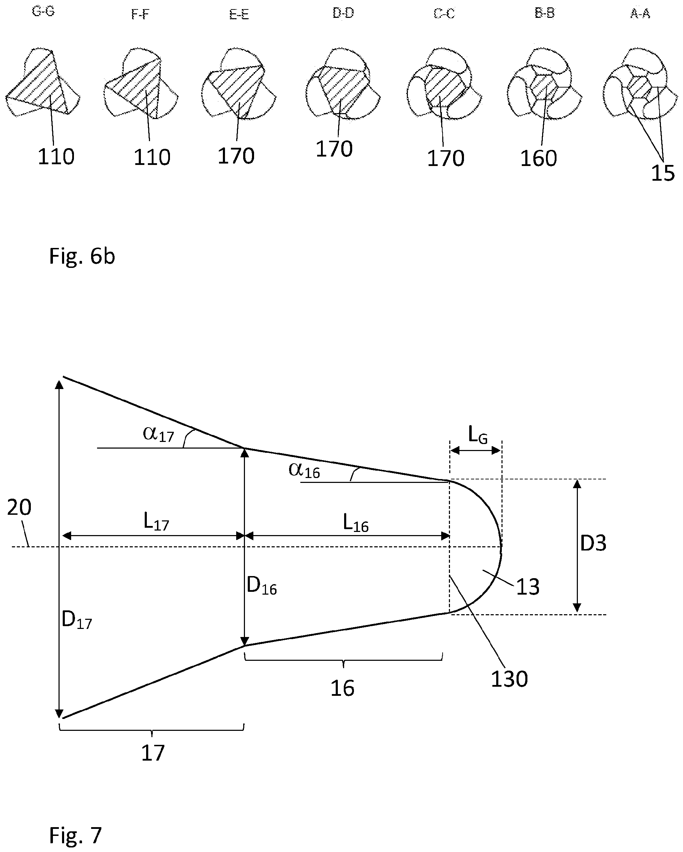

Les **figures 6a et 6b** montrent des sections transversales A-A, B-B, C-C, D-D, E-E, F-F et G-G, à différentes positions (figure 6a) de la portion distale 12 le long de l'axe longitudinal 20 de l'instrument, respectivement de la tête de guidage 13 en allant vers le tronçon de travail 11. Comme illustré dans la figure 6b, la zone distale 16 comporte une section distale 160 de géométrie hexagonale formant six arêtes de coupe 15 (sections transversales A-A et B-B). La zone proximale 17 comporte une section proximale 170 dont la géométrie évolue entre section hexagonale 160 de la zone distale 16 et la section de travail 110 (sections transversales C-C, D-D, E-E, F-F et G-G).

La section distale 160 de géométrie hexagonale ainsi que la répartition de la coupe sur les six arêtes de coupe 15, assurent une distribution optimisée des contraintes mécaniques, limitant au maximum le risque de casse de l'instrument.

Pour l'utilisation de ce type d'instruments les grandeurs suivantes sont déterminantes. Les diamètres nominaux D1 et D2 sont les diamètres du cercle circonscrit, c'est-à-dire le cercle dans lequel s'inscrit une section transversale de l'instrument au niveau de tronçon de travail 11 (voir la figure 4). Le diamètre de tête de guidage D3 correspond au diamètre de la base proximale 130 de la tête de guidage, c'est-à-dire au niveau du plan 161.

Selon une forme d'exécution, la dimension de la section distale 160 de la zone distale 16 est constante. Autrement dit, le cercle circonscrit (le cercle dans lequel s'inscrit une section transversale de la zone distale 16), est de diamètre constant. La figure 6a montre un tel exemple de la portion distale 12 dont la zone distale 16, s'étendant entre les sections transversales A-A et B-B, a une section distale 160 de dimension constante.

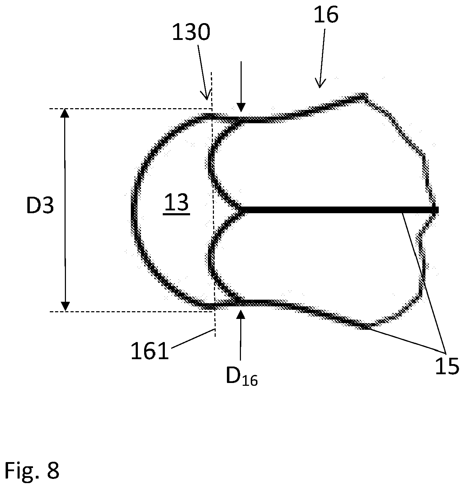

La **figure 7,** montre une section de la portion distale 12 selon l'axe longitudinal 20 de l'instrument. Selon la figure 8, Le diamètre $D_{17}$ de la zone proximale 17 est progressivement croissant sur au moins une partie de sa longueur $L_{17}$, entre la zone distale 16 vers le tronçon de travail 11 de l'instrument 10. Le diamètre $D_{16}$ de la zone distale 16 est également progressivement croissant sur au moins une partie de sa longueur $L_{16}$, entre la tête de guidage 13 et la zone proximale 17. Autrement dit, au moins une portion de la zone distale 16 et la proximale 17 est tronconique et fait, respectivement, un angle distal $\alpha_{16}$ et un angle proximal $\alpha_{17}$ avec l'axe longitudinal 20 de l'instrument.

Selon une autre forme d'exécution, la section distale 160 de la zone distale 16 et la section proximale 170 de la zone proximale 17 sont progressivement croissantes sur au moins une partie de la longueur de la zone proximale 17 et de la zone distale 16, entre la tête de guidage 13 vers le tronçon de travail 11 de l'instrument 10.

Dans un mode de réalisation, la tête de guidage 13 est arrondie. Comme illustré dans les figures 5, 6a et 7, la tête de guidage 13 est de forme sensiblement hémisphérique (ou en forme de dôme).

Encore dans un autre mode de réalisation illustré à la **figure 8,** le diamètre D3 de la tête de guidage 13 est supérieur au diamètre $D_{16}$ du cercle circonscrit de la zone distale 16 sur au moins une partie de la longueur de la zone distale 16. Selon une forme d'exécution, le diamètre D3 de la tête de guidage 13 est supérieur au diamètre $D_{16}$ du cercle circonscrit de la zone distale 16 au niveau du plan 161.

De nouveau en référence à la figure 6b (sections transversales A-A et B-B), la section distale 160 a une forme d'un hexagone sensiblement régulier, c'est-à-dire dont les six côtés ont tous sensiblement la même longueur. Cependant, on peut également considérer la section distale 160 ayant une forme d'un hexagone irrégulier sans sortir du cadre de l'invention.

La section proximale 170 de la zone proximale 17 a une géométrie qui évolue graduellement de la géométrie hexagonale de la section distale 160 à géométrie correspondant à celle de la section de travail 110, en allant de la tête de guidage 13 vers le tronçon de travail 11.

Par exemple, et tel qu'illustré à la figure 6b (sections transversales B-B, C-C, D-D, E-E, F-F et G-G), la section de travail 110 est triangulaire (section transversale G-G) et la section proximale 170 se transforme à partir d'une géométrie hexagonale régulière (section transversale B-B) en une géométrie triangulaire (sections transversales F-F et G-G), en passant par une géométrie irrégulière (sections transversales C-C, D-D et E-E).

Il va de soi que la présente invention n'est pas limitée au mode de réalisation qui vient d'être décrit et que diverses modifications et variantes simples peuvent être envisagées par l'homme de métier sans sortir du cadre de la présente invention.

Par exemple, la section de travail 110 peut avoir une autre forme que triangulaire avec trois arêtes de coupe. De la même manière, la zone distale 16 peut comporter une section distale 160 ayant une géométrie qui diffère de la géométrie hexagonale illustrée à la figure 6b. En particulier, au moins la section de travail 110 et/ou la section distale 160 peut avoir une section en « S » avec deux arrêtes de coupe, une section triangulaire avec trois arrêtes de coupe, une section quadrilatérale avec quatre arrêtes de coupe, ou encore une section de forme plus complexe avec plus de quatre arrêtes de coupe 15.

Selon une forme privilégiée de l'invention, le rapport $L_{16}/L_G$ de la longueur $L_{16}$ de la zone distale 16 sur la longueur $L_G$ de la tête de guidage 13 est supérieur à 1. Le rapport $L_{16}/L_G$ peut également être supérieur à 2, voire à 3 ou à 5. Un grand rapport $L_{16}/L_G$ signifie que les arrêtes de guidage 15 de la zone distale 16 viennent jusque vers l'extrémité du secteur angulaire de coupe 14, facilitant l'usinage apical du canal par le secteur angulaire de coupe 14.

Le rapport de la longueur $L_{17}$ de la zone proximale 17 sur la longueur $L_{16}$ de la zone distale 16 peut être exprimé en fonction de l'angle distal $\alpha_{16}$, de l'angle proximal $\alpha_{17}$, du diamètre $D_{17}$ de la zone proximale 17 ainsi que le diamètre $D_{16}$ de la zone distale 16. Plus particulièrement, Le rapport de la longueur $L_{17}$ sur la longueur $L_{16}$ peut être exprimé par l'équation 1 :

$$\frac{L_{17}}{L_{16}} = \frac{(D_{17} - D_{16})}{(D_{16} - D_3)} \times \frac{\tan\alpha_{16}}{\tan\alpha_{17}} \qquad\qquad (1)$$

Selon une forme d'exécution, le rapport de la longueur $L_{17}$ de la zone proximale 17 sur la longueur $L_{16}$ de la zone distale 16 est compris entre 0.1 et 10. Le rapport de la longueur de la zone proximale 17 sur la longueur de la zone distale 16 peut être compris entre 0.2 et 4.5 ou entre 0.6 et 1.8.

Selon une forme d'exécution, le diamètre $D_{16}$ du cercle circonscrit de la zone distale 16 est constant sur toute la longueur $L_{16}$ la zone distale 16. Autrement dit, l'angle distal $\alpha_{16}$ est sensiblement de 0°.

De manière similaire, le diamètre $D_{17}$ du cercle circonscrit de la zone proximale 17 peut être constant sur toute la longueur $L_{17}$ la zone proximale 17.

Numéros de référence employés sur les figures

| | |
|---|---|
| 10 | instrument |
| 11 | tronçon de travail |
| 110 | section de travail |
| 12 | portion distale, zone d'extrémité |
| 13 | tête de guidage, secteur de guidage |
| 130 | base proximale |
| 14 | secteur angulaire de coupe |
| 15 | arête de coupe |
| 16 | zone distale, pointe |
| 160 | section distale |
| 161 | plan à la jonction de la tête de guidage et de la zone distale |
| 17 | zone proximale |
| 170 | section proximale |
| 20 | axe longitudinal |
| 30 | canal |

| | |
|---|---|
| $\alpha_{16}$ | angle distal |
| $\alpha_{17}$ | angle proximal |
| D1, D2 | diamètre nominal |
| D3 | diamètre de tête de guidage |
| $D_{16}$ | diamètre de la zone distale |
| $D_{17}$ | diamètre de la zone proximale |
| $L_{16}$ | longueur de la zone distale |
| $L_{17}$ | longueur de la zone proximale |
| $L_G$ | longueur de la tête de guidage |

**Revendications**

**1.** Instrument endodontique notamment pour l'alésage d'un canal radiculaire d'une dent d'un patient, l'instrument comprenant un tronçon de travail (11) ayant une section de travail (110), le tronçon de travail (11) se terminant par une portion distale (12) ayant une double fonction de guidage et de coupe ;

la portion distale (12) comportant une tête de guidage (13) arrondie et un secteur angulaire de coupe (14) entre la tête de guidage (13) et le tronçon de travail (11) ;
**caractérisé en ce que**
le secteur angulaire de coupe (14) comprend une zone distale (16) adjacente à la tête de guidage (13) et une zone proximale (17) entre la zone distale (16) et le tronçon de travail (11) ;
le secteur angulaire de coupe (14) comprenant en outre des arêtes de coupe (15) se prolongent sur toute la longueur de la zone proximale (17) et la zone distale (16) ;
la zone distale (16) comportant une section distale (160) de géométrie constante et la zone proximale (17) comportant une section proximale (170) dont la géométrie varie entre la section distale (160) et la section de travail (110).

**2.** L'instrument endodontique selon la revendication 1,
dans lequel le rapport de la longueur ($L_{16}$) de la zone distale (16) sur la longueur ($L_G$) de la tête de guidage (13) est supérieur à 1 ou est supérieur à 2.

**3.** L'instrument endodontique selon la revendication 1 ou 2, dans lequel au moins une portion de la zone distale (16) et la zone proximale (17) est tronconique et faisant respectivement un angle distal ($\alpha_{16}$) et un angle proximal ($\alpha_{17}$) avec l'axe longitudinal (20) de l'instrument.

**4.** L'instrument endodontique selon l'une des revendications 1 à 3,
dans lequel le diamètre (D3) de la tête de guidage (13) est supérieur au diamètre ($D_{16}$) du cercle circonscrit de la zone distale (16) sur au moins une partie de la longueur de la zone distale (16).

**5.** L'instrument endodontique selon la revendication 4,
dans lequel le diamètre (D3) de la tête de guidage (13) est supérieur au diamètre ($D_{16}$) du cercle circonscrit de la zone distale (16) à la jonction de la tête de guidage (13) et de la zone distale (16).

**6.** L'instrument endodontique selon l'une des revendications 1 à 5,
dans lequel le rapport de la longueur ($L_{17}$) de la zone proximale (17) sur la longueur ($L_{16}$) de la zone distale (16) est compris entre 0.1 et 10.

**7.** L'instrument endodontique selon la revendication 6,
dans lequel le rapport de la longueur ($L_{17}$) de la zone proximale (17) sur la longueur ($L_{16}$) de la zone distale (16) est compris entre 0.2 et 4.5 ou entre 0.6 et 1.8.

**8.** L'instrument endodontique selon l'une des revendications 1 à 7,
dans lequel le diamètre ($D_{16}$) du cercle circonscrit de la zone distale (16) est constant sur toute la longueur ($L_{16}$) la zone distale (16).

**9.** L'instrument endodontique selon l'une des revendications 1 à 8,
dans lequel le diamètre ($D_{17}$) du cercle circonscrit de la zone proximale (17) est constant sur toute la longueur ($L_{17}$) la zone proximale (17).

**10.** L'instrument endodontique selon l'une des revendications 1 à 9,
dans lequel la section distale (160) a une forme d'un hexagone sensiblement régulier.

**11.** L'instrument endodontique selon l'une des revendications 1 à 9,
dans lequel la section distale (160) a une forme de « S » avec deux arrêtes de coupe, triangulaire avec trois arrêtes de coupe, ou quadrilatérale avec quatre arrêtes de coupe.

**12.** L'instrument endodontique selon l'une des revendications 1 à 11,
dans lequel la section de travail (110) est triangulaire.

**13.** L'instrument endodontique selon l'une des revendications 1 à 11,
dans lequel la section de travail (110) a une forme de « S » avec deux arrêtes de coupe, triangulaire avec trois arrêtes de coupe, ou quadrilatérale avec quatre arrêtes de coupe.

**Patentansprüche**

1. Endodontisches Instrument, insbesondere zum Bohren eines Wurzelkanals eines Zahns eines Patienten, wobei das Instrument einen Arbeitsteil (11) mit einem Arbeitsquerschnitt (110) umfasst, wobei der Arbeitsteil (11) in einem distalen Abschnitt (12) endet, der eine doppelte Funktion der Führung und des Schneidens hat;

   wobei der distale Abschnitt (12) einen gerundeten Führungskopf (13) und einen Schneidwinkelsektor (14) zwischen dem Führungskopf (13) und dem Arbeitsteil (11) aufweist;
   **dadurch gekennzeichnet, dass**
   der Schneidwinkelsektor (14) einen distalen Bereich (16), der dem Führungskopf (13) benachbart ist, und einen proximalen Bereich (17) zwischen dem distalen Bereich (16) und dem Arbeitsteil (11) umfasst;
   wobei der Schneidwinkelsektor (14) außerdem Schneidkanten (15) umfasst, die sich über die gesamte Länge des proximalen Bereichs (17) und des distalen Bereichs (16) erstrecken;
   wobei der distale Bereich (16) einen distalen Querschnitt (160) mit konstanter Geometrie aufweist und der proximale Bereich (17) einen proximalen Querschnitt (170) aufweist, dessen Geometrie zwischen dem distalen Querschnitt (160) und dem Arbeitsquerschnitt (110) variiert.

2. Endodontisches Instrument nach Anspruch 1,
   wobei das Verhältnis der Länge ($L_{16}$) des distalen Bereichs (16) zur Länge ($L_G$) des Führungskopfes (13) größer als 1 oder größer als 2 ist.

3. Endodontisches Instrument nach Anspruch 1 oder 2, wobei wenigstens ein Abschnitt des distalen Bereichs (16) und des proximalen Bereichs (17) kegelstumpfförmig ist und mit Längsachse (20) des Instruments einen distalen Winkel ($\alpha_{16}$) bzw. einen proximalen Winkel ($\alpha_{17}$) bildet.

4. Endodontisches Instrument nach einem der Ansprüche 1 bis 3,
   wobei der Durchmesser (D3) des Führungskopfes (13) auf wenigstens einem Teil der Länge des distalen Bereichs (16) größer als der Durchmesser ($D_{16}$) des umbeschriebenen Kreises des distalen Bereichs (16) ist.

5. Endodontisches Instrument nach Anspruch 4,
   wobei der Durchmesser (D3) des Führungskopfes (13) an der Verbindungsstelle des Führungskopfes (13) und des distalen Bereichs (16) größer als der Durchmesser ($D_{16}$) des umbeschriebenen Kreises des distalen Bereichs (16) ist.

6. Endodontisches Instrument nach einem der Ansprüche 1 bis 5,
   wobei das Verhältnis der Länge ($L_{17}$) des proximalen Bereichs (17) zur Länge ($L_{16}$) des distalen Bereichs (16) zwischen 0,1 und 10 liegt.

7. Endodontisches Instrument nach Anspruch 6,
   wobei das Verhältnis der Länge ($L_{17}$) des proximalen Bereichs (17) zur Länge ($L_{16}$) des distalen Bereichs (16) zwischen 0,2 und 4,5 oder zwischen 0,6 und 1,8 liegt.

8. Endodontisches Instrument nach einem der Ansprüche 1 bis 7,
   wobei der Durchmesser ($D_{16}$) des umbeschriebenen Kreises des distalen Bereichs (16) auf der gesamten Länge ($L_{16}$) des distalen Bereichs (16) konstant ist.

9. Endodontisches Instrument nach einem der Ansprüche 1 bis 8,
   wobei der Durchmesser ($D_{17}$) des umbeschriebenen Kreises des proximalen Bereichs (17) auf der gesamten Länge ($L_{17}$) des proximalen Bereichs (17) konstant ist.

10. Endodontisches Instrument nach einem der Ansprüche 1 bis 9,
    wobei der distale Querschnitt (160) eine Form eines im Wesentlichen regelmäßigen Sechsecks hat.

11. Endodontisches Instrument nach einem der Ansprüche 1 bis 9,
    wobei der distale Querschnitt (160) eine S-Form mit zwei Schneidkanten, eine dreieckige Form mit drei Schneidkanten oder eine vierseitige Form mit vier Schneidkanten aufweist.

**12.** Endodontisches Instrument nach einem der Ansprüche 1 bis 11,
wobei der Arbeitsquerschnitt (110) dreieckig ist.

**13.** Endodontisches Instrument nach einem der Ansprüche 1 bis 11,
wobei der Arbeitsquerschnitt (110) eine S-Form mit zwei Schneidkanten, eine dreieckige Form mit drei Schneidkanten oder eine vierseitige Form mit vier Schneidkanten aufweist.


**Claims**

**1.** Endodontic instrument notably for reaming a root canal of a tooth of a patient, the instrument comprising a working
length (11) having a working section (110), the working length (11) being terminated by a distal portion (12) having
a dual guiding and cutting function;

the distal portion (12) comprising a rounded guide head (13) and an angular cutting segment (14) between the
guide head (13) and the working length (11); **characterized in that**
the angular cutting segment (14) comprises a distal zone (16) adjacent to the guide head (13) and a proximal
zone (17) between the distal zone (16) and the working length (11) ;
the angular cutting segment (14) further comprising cutting edges (15) that extend over the entire length of the
proximal zone (17) and the distal zone (16);
the distal zone (16) comprising a distal section (160) of constant geometry and the proximal zone (17) comprising
a proximal section (170), the geometry of which varies between the distal section (160) and the working section
(110).

**2.** Endodontic instrument according to Claim 1, wherein the ratio of the length $(L_{16})$ of the distal zone (16) to the length
$(L_G)$ of the guide head (13) is greater than 1 or is greater than 2.

**3.** Endodontic instrument according to Claim 1 or 2, wherein at least one portion of the distal zone (16) and the proximal
zone (17) is tapered, respectively forming a distal angle $(\alpha_{16})$ and a proximal angle $(\alpha_{17})$ with the longitudinal axis
(20) of the instrument.

**4.** Endodontic instrument according to one of Claims 1 to 3,
wherein the diameter (D3) of the guide head (13) is greater than the diameter $(D_{16})$ of the circumscribed circle of
the distal zone (16) over at least a part of the length of the distal zone (16).

**5.** Endodontic instrument according to Claim 4, wherein the diameter (D3) of the guide head (13) is greater than the
diameter $(D_{16})$ of the circumscribed circle of the distal zone (16) at the junction of the guide head (13) and of the
distal zone (16).

**6.** Endodontic instrument according to one of Claims 1 to 5,
wherein the ratio of the length $(L_{17})$ of the proximal zone (17) to the length $(L_{16})$ of the distal zone (16) is between
0.1 and 10.

**7.** Endodontic instrument according to Claim 6, wherein the ratio of the length $(L_{17})$ of the proximal zone (17) to the
length $(L_{16})$ of the distal zone (16) is between 0.2 and 4.5 or between 0.6 and 1.8.

**8.** Endodontic instrument according to one of Claims 1 to 7,
wherein the diameter $(D_{16})$ of the circumscribed circle of the distal zone (16) is constant over the entire length $(L_{16})$
of the distal zone (16) .

**9.** Endodontic instrument according to one of Claims 1 to 8,
wherein the diameter $(D_{17})$ of the circumscribed circle of the proximal zone (17) is constant over the entire length
$(L_{17})$ of the proximal zone (17) .

**10.** Endodontic instrument according to one of Claims 1 to 9,
wherein the distal section (160) has the form of a substantially regular hexagon.

**11.** Endodontic instrument according to one of Claims 1 to 9,

wherein the distal section (160) has the form of an "S" with two cutting edges, has a triangular form with three cutting edges, or a quadrilateral form with four cutting edges.

12. Endodontic instrument according to one of Claims 1 to 11,
    wherein the working section (110) is triangular.

13. Endodontic instrument according to one of Claims 1 to 11,
    wherein the working section (110) has the form of an "S" with two cutting edges, has a triangular form with three cutting edges, or a quadrilateral form with four cutting edges.

(a)                    (b)

Fig. 1

Fig. 2

Fig. 3

Fig. 4

Fig. 5

Fig. 6a

G-G   F-F   E-E   D-D   C-C   B-B   A-A

110   110   170   170   170   160   15

Fig. 6b

$\alpha_{17}$

$\alpha_{16}$

$L_G$

20

$L_{17}$

$L_{16}$

D3

$D_{16}$

13

$D_{17}$

16

130

17

Fig. 7

Fig. 8

**EP 4 157 139 B1**

**RÉFÉRENCES CITÉES DANS LA DESCRIPTION**

**Documents brevets cités dans la description**

- CH 707745